# EUROPÄISCHE PATENTANMELDUNG

(11) **EP 1 787 800 A1**
(43) Veröffentlichungstag der Anmeldung: **23.05.2007**
(21) Anmeldenummer: 05405644.5
(22) Anmeldetag: 17.11.2005
(51) Int. Cl.: B32B 15/08, B32B 27/30, B65D 75/36

(54) **Kaltverformbares Laminat für Blisterbodenteile**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Ein kaltverformbares Laminat (10) aus einer beidseitig mit Kunststoff kaschierten Aluminiumfolie (14) zur Herstellung von Bodenteilen von Blisterverpackungen für gegen Feuchtigkeit und Sauerstoff empfindliche Produkte weist eine auf einer ersten Seite der Aluminiumfolie (14) angeordnete Kunststoffschicht als Aussenschicht (12) und einer auf der zweiten Seite der Aluminiumfolie (14) angeordneten Siegelschicht (16) aus einer Folie oder aus einer Beschichtung aus Polyvinylidenchlorid (PVDC) auf. Das Laminat eignet sich zur Herstellung von Bodenteilen von Blisterverpackungen für gegen Feuchtigkeit und Sauerstoff empfindliche Produkte und bietet gegenüber herkömmlichen Laminaten nach dem Stand der Technik eine höhere Schutzwirkung gegen den Durchtritt von Feuchtigkeit und Gasen, wie z. B. Sauerstoff, bei Querdiffusion.

## Beschreibung

Die Erfindung betrifft ein kaltverformbares Laminat aus einer beidseitig mit Kunststoff kaschierten Aluminiumfolie zur Herstellung von Bodenteilen von Blisterverpackungen für gegen Feuchtigkeit und Sauerstoff empfindliche Produkte, mit einer auf einer ersten Seite der Aluminiumfolie angeordneten Kunststoffschicht als Aussenschicht und einer auf der zweiten Seite der Aluminiumfolie angeordneten Siegelschicht.

Kaltverformbare Laminate aus einer beidseitig mit Kunststoff kaschierten Aluminiumfolie werden unter anderem zur Herstellung von Bodenteilen von Blisterverpackungen für Arzneimittel verwendet. In die Bodenteile sind Näpfe zur Aufnahme einzelner Tabletten oder anderer Formen von Einzeldosen geformt. Die Aluminiumfolie dient hier primär als Barriereschicht gegen den Durchtritt von Wasserdampf und Gasen und schützt die Produkte vor allem vor einer Auf nahme oder Abgabe von Feuchtigkeit.

Herkömmliche Laminate zur Herstellung von Bodenteilen von Blisterverpackungen für Arzneimittel haben häufig den Aufbau oPA / Aluminiumfolie / Siegelschicht. Gebräuchliche Siegelschichten bestehen aus 15 bis 100 µm PVC, 20 - 60 µm PP oder 30 - 50 µm PE. Nach Füllung der Näpfe wird eine gegebenenfalls peelbare Deckfolie gegen das Bodenteil gesiegelt. Herkömmliche Deckfolien sind gegebenenfalls mit Kunststoff beschichtete, mit Folie kaschierte oder lackierte Aluminiumfolien. Bei diesen Blisterverpackungen sind die Produkte zwischen zwei als Barriere gegen den Durchtritt von Wasserdampf und Gasen angeordneten Aluminiumfolien von beiden Seiten gegen Umwelteinflüsse geschützt.

Eine Blisterverpackung hat jedoch ungeschützte Stellen. Nach dem Ausstanzen liegen die Schnittkanten und bei Perforation die Perforationsschnitte frei. Die Siegelschicht ist an diesen Stellen nicht mehr durch die Barriereschicht aus Aluminium geschützt. Über die Zeit diffundieren Feuchtigkeit und Gase durch Querdiffusion durch den Kunststoff in die Näpfe und verkürzt dadurch die Haltbarkeit des Füllgutes.

Es werden immer mehr Wirkstoffe für Medikamente und Chemikalien für Diagnostikanwendungen entwickelt, welche eine sehr hohe Empfindlichkeit gegenüber Feuchtigkeit und Sauerstoff aufweisen. Für derartige Produkte wären Blisterverpackungen mit verminderter Querdiffusion wünschenswert.

Aus WO-A-2004/000541 und WO-A-2004/080808 sind mehrschichtige Filme mit einer Barriereschicht und mit einer Feuchtigkeit absorbierendes Material enthaltenden Siegelschicht bekannt. Die Filme dienen zur Verpackung von gegen Feuchtigkeit und Sauerstoff empfindlichen Gegenständen, wie z.B. Diagnostik-Teststreifen, und werden entweder nach Faltung gegen sich selbst oder gegen einen zweiten Film heissgesiegelt. Als Feuchtigkeit absorbierendes Material mit starker Wasserbindung wird bevorzugt Kalziumoxid (CaO) eingesetzt.

Der Erfindung liegt die Aufgabe zugrunde, ein zur Herstellung von Bodenteilen von Blisterverpackungen für gegen Feuchtigkeit und Sauerstoff empfindliche Produkte geeignetes kaltvetformbares Laminat der eingangs genannten Art zu schaffen, welches gegenüber herkömmlichen Laminaten nach dem Stand der Technik auch ohne Beimischung von Feuchtigkeit absorbierenden Materialien zur Siegelschicht eine höhere Schutzwirkung gegen den Durchtritt von Feuchtigkeit und Sauerstoff bei Querdiffusion aufweisen.

Zur erfindungsgemässen Lösung der Aufgabe führt, dass die Siegelschicht aus einer Folie oder aus einer Beschichtung aus Polyvinylidenchlorid (PVDC) besteht.

Bevorzugt ist die Aussenschicht eine biaxial gereckte Folie aus Kunststoff.

Ein erster erfindungsgemässer Laminataufbau weist die Schichtfolge Aussenschicht / Aluminiumfolie / Siegelschicht auf.

Bei einem zweiten erfindungsgemässen Laminataufbau mit der Schichtfolge Aussenschicht / Zwischenschicht / Aluminiumfolie / Siegelschicht ist zwischen der Aussenschicht und der Aluminiumfolie eine weitere, bevorzugt biaxial gereckte Folie aus Kunststoff als Zwischenschicht angeordnet.

Bei einem dritten erfindungsgemässen Laminataufbau mit der Schichtfolge Aussenschicht / Aluminiumfolie / Zwischenschicht / Siegelschicht ist zwischen der Siegelschicht und der Aluminiumfolie eine weitere, bevorzugt biaxial gereckte Folie aus Kunststoff als Zwischenschicht angeordnet.

Bei einem vierten erfindungsgemässen Laminataufbau mit der Schichtfolge Aussenschicht / Zwischenschicht / Aluminiumfolie / Zwischenschicht / Siegelschicht ist sowohl zwischen der Aussenschicht und der Aluminiumfolie als auch zwischen der Siegelschicht und der Aluminiumfolie je eine weitere, bevorzugt biaxial gereckte Folie aus Kunststoff als Zwischenschicht angeordnet.

Die Aluminiumfolie liegt im Zustand weich vor und weist bevorzugt eine Dicke von 20 bis 100 µm, insbesondere 30 bis 60 µm, auf.

Die biaxial gereckten Folien aus Kunststoff weisen bevorzugt eine Dicke von 10 bis 40 µm, insbesondere 12 bis 40 µm, auf.

Die biaxial gereckten Folien können aus Polypropylen (PP), Polyester, Polyvinylchlorid (PVC), Polyamid (PA), Cycloolefincopolymer (COC) oder Cyclooleflnpolymer (COP) bestehen.

Die Folie aus Polyvinylidenchlorid (PVDC) kann ungereckt oder gereckt sein und weist bevorzugt eine Dicke von 5 bis 110 µm, insbesondere 10 bis 60 µm, auf. Es können handelsübliche Materialien wie IXAN®, DIOFAN®, SARAN®, SARANEX® oder SUMINLITE® eingesetzt werden.

Eine Beschichtung mit Polyvinylidenchlorid (PVDC) erfolgt aus wässriger Lösung oder aus in organischem Lösemittel gelöstem Harz. Das Auftragsgewicht beträgt bevorzugt 5 bis 120 g/m², insbesondere 10 bis 60 g/m².

Die einzelnen Schichten können durch Kaschierung mit lösemittelbasierten, lösemitteffreien oder wässrigen Klebstoffen und/oder durch Extrusionskaschierung verbunden werden. Die Aussenschicht oder die darunter liegende Aluminiumfolie kann bedruckt sein.

Aus dem kaltverformbaren Laminat kann auf bekannte Art ein Blisterbodenteil hergestellt werden. Die Siegelschicht des Laminates bildet dabei die Innenschicht des Blisterbodenteils.

Bei einer Blisterverpackung für gegen Feuchtigkeit und Sauerstoff empfindliche Produkte, insbesondere für pharmazeutische Produkte wie gegen Feuchtigkeit und Sauerstoff empfindliche Tabletten und Pulver, ist in bekannter Art eine gegebenenfalls mit Kunststoff und/oder mit anderen Materialien beschichtete, mit Folie kaschierte oder lackierte Aluminiumfolie gegen die PVDC-Schicht des Blisterbodenteils gesiegelt.

In den Tabellen 1 bis 4 sind für die vier erfindungsgemässen Laminataufbauten bevorzugten Folienkombinationen zusammengestellt.

Die Kurzbezeichnungen der den Folien zugrunde liegenden Kunststoffe bedeuten:

| | | | |
|---|---|---|---|
| oPA | orientiertes Polyamid | PET | Polyethylenterephthalat |
| oPP | orientiertes Polypropylen | PVDC | Polyvinylidenchlorid |

**Tabelle 1: Erster Laminataufbau**

| **Nr.** | **Aussenschicht** | **Al** | | **Siegelschicht** |
|---|---|---|---|---|
| 1 | 25 µm oPA | Al | 45 | 10 µm PVDC |
| 2 | 25µm oPA | Al | 60 | 10 µm PVDC |
| 3 | 25 µm oPA | Al | 45 | 20 g/m² PVDC |
| 4 | 25 µm oPA | Al | 60 | 20 g/m² PVDC |
| 5 | 25 µm oPA | Al | 45 | 15 µm PVDC |
| 6 | 25 µm oPA | Al | 60 | 15 µm PVDC |
| 7 | 25 µm oPA | Al | 45 | 19 µm PVDC |
| 8 | 25 µm oPA | Al | 60 | 19 µm PVDC |
| 9 | 25 µm oPA | Al | 45 | 25 µm PVDC |
| 10 | 25 µm oPA | Al | 60 | 25 µm PVDC |
| 11 | 25 µm oPA | Al | 45 | 60 g/m² PVDC |
| 12 | 25 µm oPA | Al | 60 | 60 g/m² PVDC |
| 13 | 25 µm oPA | Al | 45 | 38 µm PVDC |
| 14 | 25 µm oPA | Al | 60 | 38 µm PVDC |
| 15 | 23 µm PET | Al | 45 | 38 µm PVDC |
| 16 | 23 µm PET | Al | 45 | 25 µm PVDC |
| 17 | 23 µm PET | Al | 45 | 40 g/m² PVDC |
| 18 | 20 µm oPP | Al | 45 | 38 µm PVDC |
| 19 | 20 µm oPP | Al | 45 | 25 µm PVDC |
| 20 | 20 µm oPP | Al | 45 | 38 µm PVDC |

**Tabelle 2: Zweiter Laminataufbau**

| **Nr.** | **Aussenschicht** | **Al** | | **Zwischenschicht** | **Siegelschicht** |
|---|---|---|---|---|---|
| 21 | 25 µm oPA | Al | 45 | 25 µm oPA | 10 µm PVDC |
| 22 | 25 µm oPA | Al | 60 | 25 µm oPA | 13 µm PVDC |
| 23 | 25 µm oPA | Al | 45 | 25 µm oPA | 25 µm PVDC |
| 24 | 25 µm oPA | Al | 60 | 25 µm oPA | 25 µm PVDC |
| 25 | 25 µm oPA | Al | 45 | 25 µm oPA | 20 g/m² PVDC |
| 26 | 25 µm oPA | Al | 60 | 25 µm oPA | 10 µm PVDC |
| 27 | 25 µm oPA | Al | 45 | 25 µm oPA | 25 µm PVDC |
| 28 | 25 µm oPA | Al | 60 | 25 µm oPA | 38 µm PVDC |
| 29 | 25 µm oPA | Al | 45 | 15 µm oPA | 13 µm PVDC |
| 30 | 25 µm oPA | Al | 60 | 15 µm OPA | 38 µm PVDC |
| 31 | 23 µm PET | Al | 60 | 25 µm oPA | 15 µm PVDC |
| 32 | 23 µm PFT | Al | 60 | 25 µm oPA | 19 µm PVDC |
| 33 | 23 µm PET | Al | 60 | 25 µm oPA | 15 µm PVDC |
| 34 | 23 µm PET | Al | 45 | 25 µm oPA | 19 µm PVDC |
| 35 | 23 µm PET | Al | 60 | 25 µm oPA | 25 µm PVDC |
| 36 | 23 µm PET | Al | 45 | 15 µm oPA | 38 µm PVDC |
| 37 | 23 µm PET | Al | 60 | 15 µm oPA | 40 g/m²PVDC |
| 38 | 20 µm oPP | Al | 60 | 25 µm oPA | 13 µm PVDC |
| 39 | 20 µm oPP | Al | 60 | 25 µm oPA | 10 µm PVDC |
| 40 | 20 µm oPP | Al | 60 | 25 µm oPA | 13 µm PVDC |
| 41 | 20 µm oPP | Al | 45 | 25 µm oPA | 25 µm PVDC |
| 42 | 20 µm oPP | Al | 60 | 25 µm oPA | 20 g/m² PVDC |
| 43 | 20 µm oPP | Al | 45 | 15 µm oPA | 25 µm PVDC |
| 44 | 20 µm oPP | Al | 60 | 15 µm oPA | 19 µm PVDC |

**Tabelle 3: Dritter Laminataufbau**

| **Nr.** | **Aussenschicht** | **Zwischenschicht** | **Al** | | **Siegelschicht** |
|---|---|---|---|---|---|
| 45 | 20 µm oPA | 20 µm oPA | Al | 45 | 10 µm PVDC |
| 46 | 15 µm oPA | 15 µm oPA | Al | 60 | 10 µm PVDC |
| 47 | 20 µm oPA | 20 µm oPA | Al | 45 | 15 µm PVDC |
| 48 | 15 µm oPA | 15 µm oPA | Al | 60 | 15 µm PVDC |
| 49 | 20 µm oPA | 20 µm oPA | Al | 45 | 40 g/m² PVDC |
| 50 | 15 µm oPA | 15 µm oPA | Al | 60 | 40 g/m² PVDC |
| 51 | 20 µm oPA | 20 µm oPA | Al | 45 | 19 µm PVDC |
| 52 | 15 µm oPA | 15 µm oPA | Al | 60 | 19 µm PVDC |

**Tabelle 4: Vierter Laminataufbau**

| **Nr.** | **Aussenschicht** | **Zwischenschicht** | **Al** | **Zwischenschicht** | **Siegelschicht** |
|---|---|---|---|---|---|
| 53 | 20 µm oPA | 20 µm oPA | Al 45 µm | 15 µm oPA | 15 µm PVDC |
| 54 | 15 µm oPA | 15 µm oPA | Al 60 µm | 15 µm oPA | 19 µm PVDC |
| 55 | 20 µm oPA | 20 µm oPA | Al 45 µm | 15 µm oPA | 13 µm PVDC |
| 56 | 15 µm oPA | 15 µm oPA | Al 60 µm | 15 µm oPA | 13 µm PVDC |
| 57 | 20 µm oPA | 20 µm oPA | Al 45 µm | 15 µm oPA | 20 g/m² PVDC |
| 58 | 15 µm oPA | 15 µm oPA | Al 60 µm | 15 µm oPA | 19 µm PVDC |

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau eines ersten kaltverformbaren Laminates für die Herstellung von Blisterbodenteilen gemäss Fig. 5, entsprechend der Schnittlinie II-II von Fig. 6;
- Fig. 2 den Schichtaufbau eines zweiten kaltverformbaren Laminates für die Herstellung von Blisterbodenteilen gemäss Fig. 5, entsprechend der Schnittlinie II-II von Fig. 6;
- Fig. 3 den Schichtaufbau eines dritten kaltverformbaren Laminates für die Herstellung von Blisterbodenteilen gemäss Fig. 5, entsprechend der Schnittlinie II-II von Fig. 6;
- Fig. 4 den Schichtaufbau eines vierten kaltverformbaren Laminates für die Herstellung von Blisterbodenteilen gemäss Fig. 5, entsprechend der Schnittlinie II-II von Fig. 6;
- Fig. 5 die Draufsicht auf einen aus einem der Laminate von Fig. 1 bis 4 kaltgeformten Blisterbodenteilen;
- Fig. 6 den Schnitt durch das Blisterbodentell von Fig. 5 nach der Linie I-I;
- Fig. 7 das Blisterbodenteil von Fig. 5 mit aufgesiegelter Durchdrückfolie bzw. einer peelbaren Deckfolie.

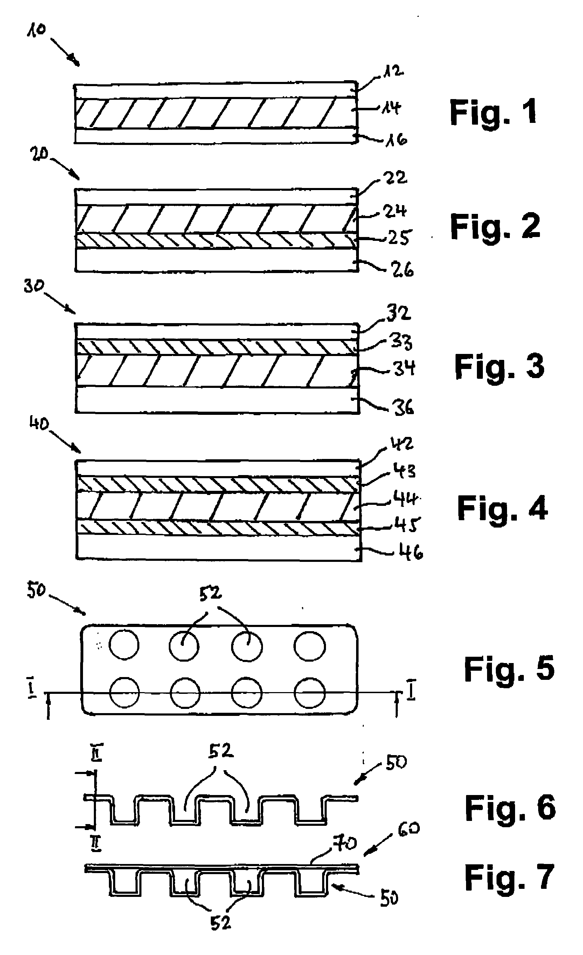

Ein erstes kaltvertormbares Laminat 10 für die Herstellung von Bodenteilen für Blisterverpackungen für gegen Feuchtigkeit und Sauerstoff empfindliche Produkte weist gemäss Fig. 1 den folgenden Schichtaufbau auf:
- 12: Aussenschicht, z.B. oPA, 25 µm
- 14: Aluminiumfolie, z.B. 60 µm
- 16: Siegelschicht aus PVDC, z.B. 10 µm oder 20 g/m²

Der oPA-Film 12 bildet die spätere Aussenseite und die Siegelschicht 16 die Innenseite eines aus dem Laminat 10 hergestellten Blisterbodenteils.

Ein zweites kaltverformbares Laminat 20 für die Herstellung von Bodenteilen für Blisterverpackungen für gegen Feuchtigkeit und Sauerstoff empfindliche Produkte weist gemäss Fig. 2 den folgenden Schichtaufbau auf:
- 22: Aussenschicht, z.B. PET, 23 µm
- 44: Aluminiumfolie, z.B. 60 µm
- 25: Zwischenschicht, z.B. oPA. 15 µm
- 26: Siegelschicht aus PVDC, z.B. 30 µm oder 40 g/m²

Der PET-Film 22 bildet die spätere Aussenseite und die Siegelschicht 26 die Innenseite eines aus dem Laminat 20 hergestellten Blisterbodenteils.

Ein dritttes kaltverformbares Laminat 30 für die Herstellung von Bodenteilen für Blisterverpackungen für gegen Feuchtigkeit und Sauerstoff empfindliche Produkte weist gemäss Fig. 3 den folgenden Schichtaufbau auf:
- 32: Aussenschicht, z.B. oPA, 20 µm
- 33: Zwischenschicht, z.B. oPA, 20 µm
- 34: Aluminiumfolie, z.B. 45 µm
- 36: Siegelschicht aus PVDC, z.B. 19 µm oder 40 g/m²

Der oPA-Film 32 bildet die spätere Aussenseite und die Siegelschicht 36 die Innenseite eines aus dem Laminat 30 hergestellten Blisterboderiteils.

Ein viertes kaltverformbares Laminat 40 für die Herstellung von Bodenteilen für Blisterverpackungen für gegen Feuchtigkeit und Sauerstoff empfindliche Produkte weist gemäss Fig. 4 den folgenden Schichtaufbau auf:
- 42: Aussenschicht, z.B. oPA, 20 µm
- 43: Zwischenschicht, z.B. oPA, 20 µm
- 44: Aluminiumfolie, z.B. 45 µm
- 45: Zwischenschicht, z.B. oPA, 15 µm
- 46: Siegelschicht aus PVDC, z.B. 13 µm oder 20 g/m²

Der oPA-Film 42 bildet die spätere Aussenseite und die Siegelschicht 46 die Innenseite eines aus dem Laminat 40 hergestellten Blisterbodenteils.

Ein in Fig. 5 gezeigtes Blisterbodenteil 50 wird aus dem Laminat 10, 20, 30, 40 hergestellt, wobei die aus dem Laminat herausgeformten Näpfe 52 zur Aufnahme von beispielsweise Tabletten durch Kaltverformung, wie z.B. durch Tiefziehen mittels Stempel und Matrize, Zweistufenverfahren mit Stempeln und Matrize oder Stempel/Druckluft und Matrize, aus dem Laminat herausgeformt sind.

Wie in den Fig. 6 und 7 dargestellt, wird nach dem Befüllen der Näpfe 52 zur Bildung einer Blisterpackung 60 je nach Bedarf eine durchdrückbare oder eine peelbare Deckfolie 70 auf das Boden 50 aufgesiegelt.

Eine als Durchdrückfolie ausgestaltete Deckfolie 70 für ein aus dem Laminat 10, 20, 30, 40 hergestelltes Blisterbodenteil 50 weist beispielsweise den folgenden Schichtaufbau auf: Siegelschicht / Aluminiumfolie / Druckvorlack / Bedruckung / Drucküberlack. Die Bedruckung mit dem Drucküberlack bildet die spätere Aussenseite der Deckfolie 70, die freie Seite der Aluminiumfolie wird gegen die Siegelschicht aus PVDC eines aus dem Laminat hergestellte Blisterbodenteils 50 gesiegelt.

Eine als peelbare Folie ausgestaltete Deckfolie 70 für ein aus dem Laminat 10, 20, 30, 40 hergestelltes Blisterbodenteil 50 weist beispielsweise den folgenden Schichtaufbau auf: Siegelmedium / Aluminiumfolie / Klebstoffschicht / Film aus Polyethylenterephthalat (PET) / Klebstoffschicht / Papier / Bedruckung / Drucküberlack. Die Bedruckung mit dem Drucküberlack bildet die spätere Aussenseite der Deckfolie 70, die freie Seite der Aluminiumfolie wird gegen die Siegelschicht aus PVDC eines aus dem Laminat hergestellte Blisterbodenteils 50 gesiegelt.

## Patentansprüche

1. Kaltverformbares Laminat (10, 20, 30, 40) aus einer beidseitig mit Kunststoff kaschierten Aluminiumfolie (14, 24, 34, 44) zur Herstellung von Bodenteilen (50) von Blisterverpackungen (60) für gegen Feuchtigkeit und Sauerstoff empfindliche Produkte, mit einer auf einer ersten Seite der Aluminiumfolie (14, 24, 34, 44) angeordneten Kunststoffschicht als Aussenschicht (12, 22, 32, 42) und einer auf der zweiten Seite der Aluminiumfolie (14, 24, 34, 44) angeordneten Siegelschicht (16, 26, 36, 46),
**dadurch gekennzeichnet, dass**
die Siegelschicht (16, 26, 36, 46) aus einer Folie oder aus einer Beschichtung aus Polyvinylidenchlorid (PVDC) besteht.

2. Kaltverformbares Laminat (10, 20, 30, 40) nach Anspruch 1, **dadurch gekennzeichnet, dass** die Aussenschicht (12, 22, 32, 42) eine biaxial gereckte Folie aus Kunststoff ist.

3. Kaltverformbares Laminat (30, 40) nach Anspruch 2, **dadurch gekennzeichnet, dass** zwischen der Aussenschicht (32, 42) und der Aluminiumfolie (34, 44) eine biaxial gereckte Folie aus Kunststoff als Zwischenschicht (33, 43) angeordnet ist.

4. Kaltverformbares Laminat (20, 40) nach einem der Ansprüche 1 bis 3, **dadurch gekennzeichnet, dass** zwischen der Aluminiumfolie (24, 44) und der Folie oder der Beschichtung (26, 46) aus Polyvinylidenchlorid (PVDC) eine biaxial gereckte Folie aus Kunststoff als Zwischenschicht (25, 45) angeordnet ist.

5. Kaltverformbares Laminat (10, 20, 30, 40) nach einem der Ansprüche 1 bis 4, **dadurch gekennzeichnet, dass** Aluminiumfolie (14, 24, 34, 44) eine Dicke von 20 bis 100 µm, vorzugsweise 30 bis 60 µm, aufweist.

6. Kaltverformbares Laminat (10, 20, 30, 40) nach einem der Ansprüche 2 bis 4, **dadurch gekennzeichnet, dass** die biaxial gereckten Folien aus Kunststoff eine Dicke von 10 bis 40 µm, vorzugsweise 12 bis 40 µm, aufweisen.

7. Kaltverformbares Laminat (10, 20, 30, 40) nach einem der Ansprüche 2 bis 4, **dadurch gekennzeichnet, dass** die biaxial gereckten Folien aus Polypropylen (PP), Polyester, Polyvinylchlorid (PVC), Polyamid (PA), Cycloofefincopolymer (COC), oder Cycloolefinpolymer (COP) sind.

8. Kaltverformbares Laminat (10, 20, 30, 40) nach einem der Ansprüche 1 bis 7, **dadurch gekennzeichnet, dass** die Folie (16, 26, 36, 46) aus Polyvinylidenchlorid (PVDC) ungereckt oder gereckt ist und Dicke von 10 bis 120 µm, vorzugsweise 12 bis 105 µm, aufweist.

9. Kaltverformbares Laminat (10, 20, 30, 40) nach einem der Ansprüche 1 bis 7, **dadurch gekennzeichnet, dass** die Beschichtung (16, 26, 36, 46) aus Polyvinylidenchlorid (PVDC) ein Auftragsgewicht von 5 bis 120 g/m², vorzugsweise 10 bis 60 g/m², aufweist.

10. Blisterbodenteil (50), hergestellt aus einem kaltverformbaren Laminat (10, 20, 30, 40) nach einem der Ansprüche 1 bis 9.

11. Blisterverpackung (60) für gegen Feuchtigkeit und Sauerstoff empfindliche Produkte, mit einem Blisterbodenteil (50) hergestellt aus einem kaltverformbaren Laminat (10, 20, 30,40) nach einem der Ansprüche 1 bis 9 und einer gegen die die Siegelschicht (16, 26, 36, 46) des Laminates auf das Blisterbodenteil (50) gesiegelten, eine Aluminiumfolie enthaltende Deckfolie (70).

12. Verwendung einer Blisterverpackung (60) nach Anspruch 11 für pharmazeutische Produkte wie gegen Feuchtigkeit und Sauerstoff empfindliche Tabletten und Pulver.
